# EUROPEAN PATENT APPLICATION

(11) **EP 4 769 753 A1**
(43) Date of publication of application: **01.07.2026**
(21) Application number: 25833276.6
(22) Date of filing: 23.06.2025
(51) Int. Cl.: H01M 50/342, H01M 10/04, H01M 50/548, H01M 50/358

(54) **BATTERY BOX**

(30) Priority: 02.07.2024 KR 20240086931; 27.11.2024 KR 20240171993
(71) Applicant: LG Energy Solution, Ltd., Seoul 07335 (KR)
(72) Inventor: LEE, Ji Sun, Daejeon 34122 (KR); HWANG, Ji Young, Daejeon 34122 (KR); LEE, Jae Ho, Daejeon 34122 (KR); KIM, Sang Hun, Daejeon 34122 (KR); CHOI, Ji Eun, Daejeon 34122 (KR); LEE, Min Kyu, Daejeon 34122 (KR)
(74) Representative: Goddar, Heinz J.
(86) International application number: PCT/KR2025/008677
(87) International publication number: WO 2026/010217

(57) **Abstract**

The present disclosure relates to a battery box, and the battery box according to an aspect of the present disclosure includes a battery cell including an electrode assembly extended in an direction, an outer casing film accommodating the electrode assembly and a cap coupled to the outer casing film and shielding a side of the electrode assembly in a length direction; and a cover frame supporting the battery cell and having an opening, wherein the outer casing film includes an accommodation portion surrounding the electrode assembly; and a venting portion present on a side of the accommodation portion, and wherein the venting portion is positioned facing the opening.

## Description

### TECHNICAL FIELD

### CROSS-REFERENCE TO RELATED APPLICATIONS

The present application claims priority to Korean Patent Application No. 10-2024-0086931 filed on July 2, 2024 and Korean Patent Application No. 10-2024-0171993 filed on November 27, 2024 in the Republic of Korea, the disclosures of which are incorporated herein by reference.

### TECHNICAL FIELD

The present disclosure relates to a battery box, and more particularly, to a battery box capable of charging and discharging electrical energy.

### BACKGROUND ART

Recently, with the widespread use of electronic devices using batteries, for example, mobile phones, laptop computers or electric vehicles, the demand for small, lightweight and relatively high-capacity secondary batteries is dramatically increasing. In particular, lithium secondary batteries are attracting attention as a power source for portable devices due to their lightweight and high energy density advantages.

Secondary batteries may be manufactured in the form of cells, and a plurality of battery cells may be packaged in a predetermined case or housing to form a battery box. Meanwhile, gases may be vented from a battery cell for a reason. For example, due to unexpected external physical and/or thermal shocks, when parts of the battery cell are destroyed, gases within the battery cell may be released.

The gases may have a negative effect on the adjacent other battery cells or the battery box, so it is desirable to control the venting to a specific location and direction. Accordingly, there has been an urgent need for development of a battery box for effectively controlling the location or direction of gas venting from a battery cell.

### SUMMARY

### TECHNICAL PROBLEM

The present disclosure is designed to solve the above-described problems, and therefore the present disclosure is directed to providing a battery box for effectively controlling the location or direction of gas venting from a battery cell.

The problems of the present disclosure are not limited to the aforementioned problems, and these and other problems will be clearly understood by persons having ordinary skill in the technical field pertaining to the present disclosure from the following description.

### TECHNICAL SOLUTION

According to an aspect of the present disclosure, provided is a battery box including a battery cell including an electrode assembly extended in an direction, an outer casing film accommodating the electrode assembly and a cap coupled to the outer casing film and shielding a side of the electrode assembly in a length direction; and a frame supporting the battery cell and having an opening, wherein the outer casing film includes an accommodation portion surrounding the electrode assembly; and a venting portion present on a side of the accommodation portion, and wherein the venting portion is positioned facing the opening.

In this instance, the cover frame may include a pair of support portions arranged in parallel with the opening positioned therebetween, and the battery cell may be supported by the pair of support portions.

In this instance, the battery cell may include a plurality of battery cells, the plurality of battery cells may be arranged along a direction, and the pair of support portions may be extended parallel to the direction.

In this instance, the cap may include a pair of caps, the pair of caps may be disposed at two sides of the electrode assembly, respectively, and the pair of support portions may support the pair of caps, respectively.

In this instance, the cap may include a pair of caps, the pair of caps may be disposed at two sides of the electrode assembly, respectively, the battery cell may include a pair of terminals electrically connected to a negative electrode and a positive electrode of the electrode assembly, respectively, and the pair of terminals may be coupled to the pair of caps, respectively.

In this instance, the cover frame may have a shape of a plate on which the battery cell is placed.

In this instance, the opening may include a plurality of venting holes formed in the cover frame.

In this instance, the venting portion may be extended in a direction, and the venting hole may be extended in a length direction of the venting portion.

In this instance, the battery cell may include a plurality of battery cells, and the plurality of venting holes may correspond to the plurality of battery cells, respectively.

In this instance, the plurality of battery cells may be arranged in a direction, and the plurality of venting holes may be arranged along the direction.

In this instance, the venting portion may be in close contact with the cover frame such that the venting portion is adjacent to the opening.

In this instance, the battery box may further include a pressing frame to apply pressure to the battery cell towards the cover frame.

In this instance, the pressing frame may be located at an opposite side to the cover frame with the battery cell positioned therebetween.

In this instance, the pressing frame may have a shape of a plate having a surface that contacts the battery cell.

In this instance, the venting portion may be configured to rupture to release gases when a pressure in an accommodation space rises.

In this instance, the venting portion may include a sealing part sealed in a length direction of the electrode assembly.

In this instance, the venting portion may rupture earlier than the accommodation portion by the pressure rise of the accommodation space.

In this instance, the venting portion may include a first coupling portion connected to an edge part of the accommodation portion; and a second coupling portion connected to another edge part of the accommodation portion and coupled to the first coupling portion.

### ADVANTAGEOUS EFFECTS

According to an aspect of the present disclosure, the frame for supporting the battery cell has the predetermined opening, and the venting portion of the battery cell configured for gas venting faces the opening. Accordingly, the location and direction of gas venting from the battery cell may be effectively controlled through the venting portion and the opening.

The effects of the present disclosure are not limited to the aforementioned effects, and these and other effects will be clearly understood by persons having ordinary skill in the technical field pertaining to the present disclosure from this specification and the accompanying drawings.

### BRIEF DESCRIPTION OF THE DRAWINGS

FIG. 1 is a perspective view of a battery box according to an embodiment of the present disclosure.
FIG. 2 is an exploded perspective view of a battery box according to an embodiment of the present disclosure.
FIG. 3 is a perspective view of a battery cell shown in FIG. 1.
FIG. 4 is a cross-sectional view of FIG. 3, taken along the line I-I.
FIG. 5 is a cross-sectional view of FIG. 3, taken along the line II-II.
FIGS. 6 and 7 are diagrams illustrating a gas venting process through an opening in a battery cell of FIG. 1.
FIG. 8 is an exploded perspective view of a battery box according to another embodiment of the present disclosure.

### DETAILED DESCRIPTION

Hereinafter, the exemplary embodiments of the present disclosure will be described in sufficient detail to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the subject matter of the present disclosure is omitted, and in affixing the reference numerals to the elements in each drawing, the identical or similar reference numerals are affixed to the identical or similar elements throughout the specification.

Additionally, it should be understood that the terms or words used in this specification and the appended claims should not be construed as limited to general and dictionary meanings, and rather, should be interpreted based on the meanings and concepts corresponding to the technical aspects of the present disclosure on the basis of the principle that the inventor is allowed to define the terms appropriately for the best explanation.

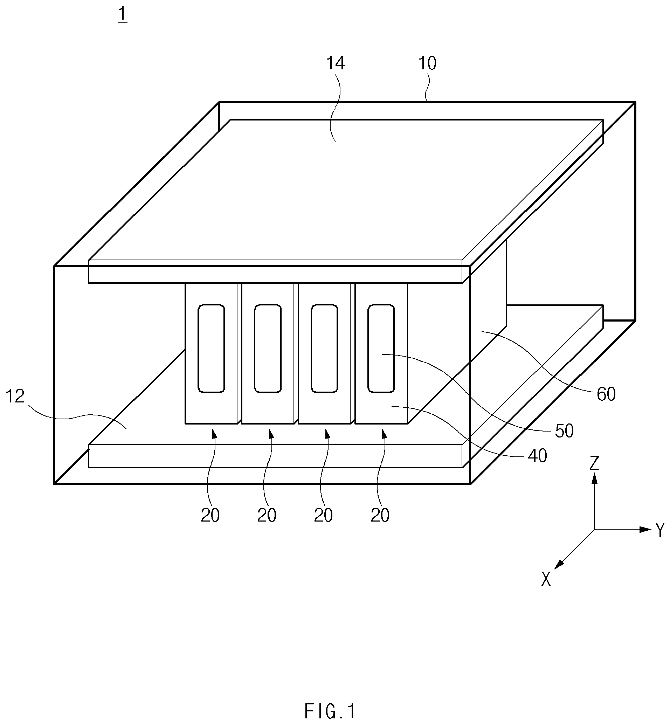

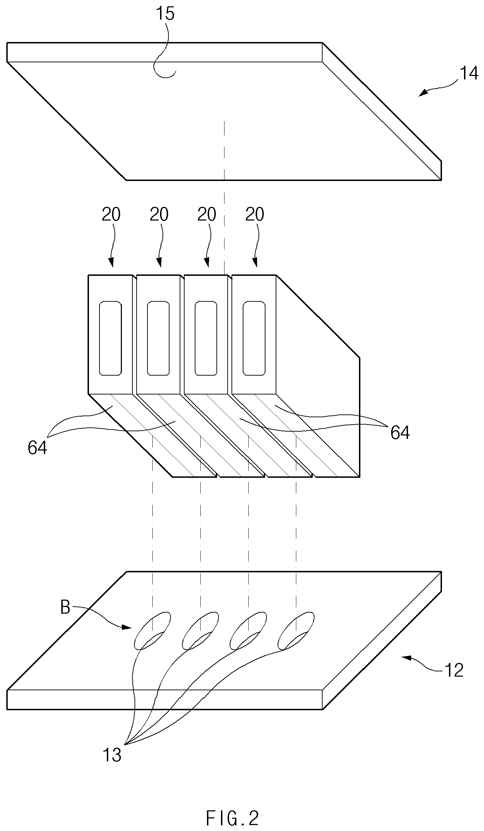

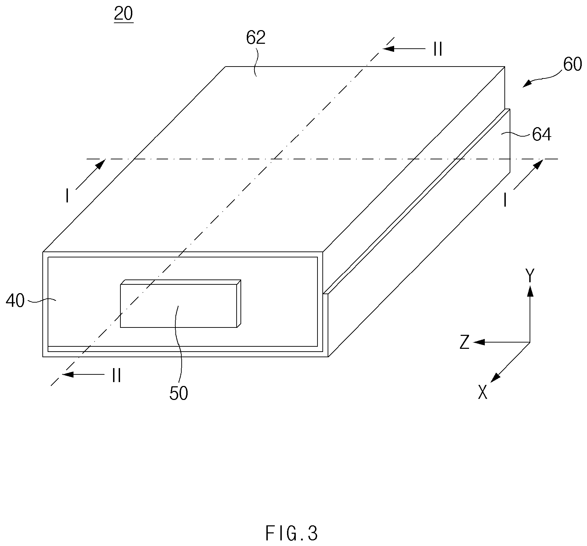

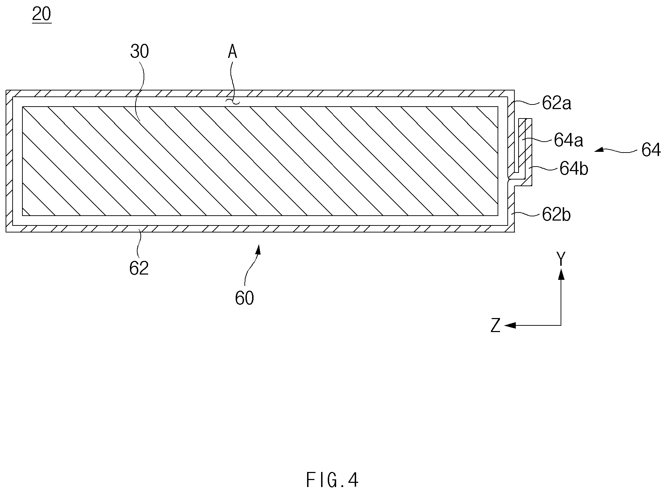

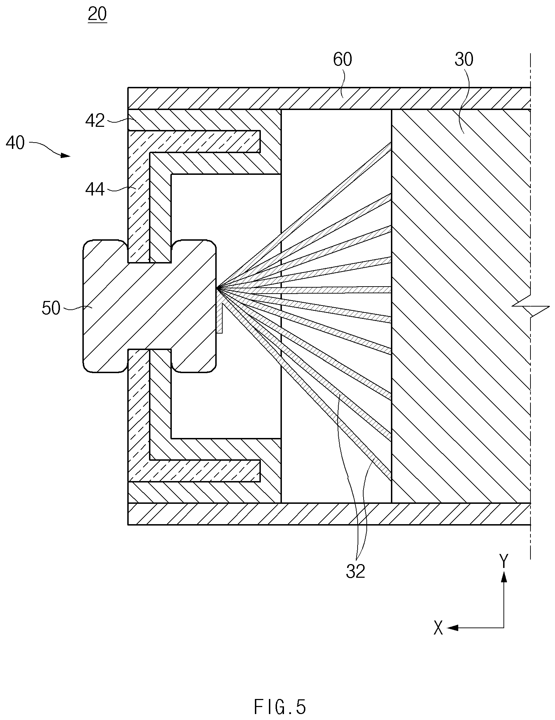

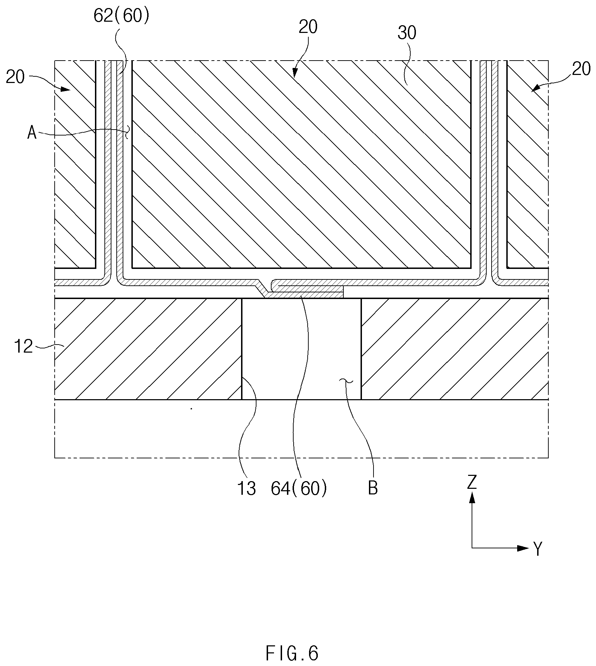

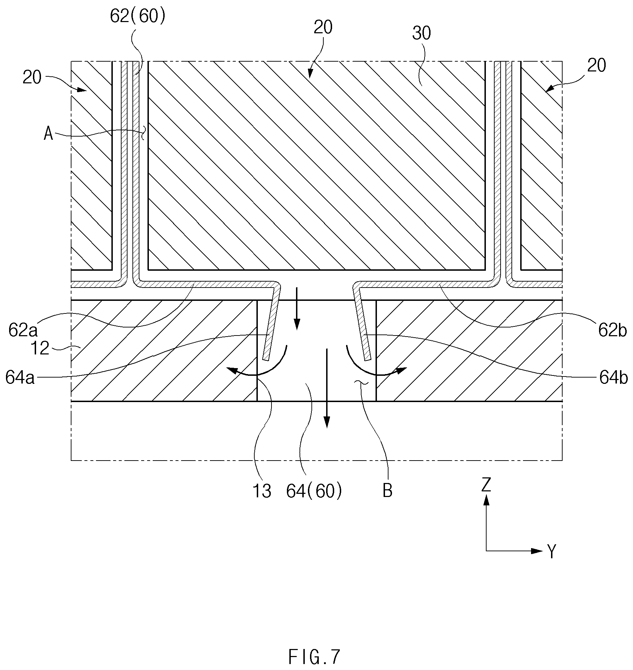

FIG. 1 is a perspective view of a battery box according to an embodiment of the present disclosure. FIG. 2 is an exploded perspective view of the battery box according to an embodiment of the present disclosure. FIG. 3 is a perspective view of a battery cell shown in FIG. 1. FIG. 4 is a cross-sectional view of FIG. 3, taken along the line I-I. FIG. 5 is a cross-sectional view of FIG. 3, taken along the line II-II. FIGS. 6 and 7 are diagrams illustrating a gas venting process through an opening in the battery cell of FIG. 1. In this instance, the components that are seen through a packaging are indicated by the solid lines in FIG. 1.

FIGS. 1 to 7 show the battery box according to an embodiment of the present disclosure. Referring to FIGS. 1 to 4, the battery box 1 according to an embodiment of the present disclosure may be an assembly capable of charging or discharging electrical energy. To this end, the battery box 1 according to this embodiment may include at least one battery cell 20.

In this instance, the battery box 1 according to an embodiment of the present disclosure may be configured to control the location and direction of gas venting from the battery cell 20 very effectively. Through this, the battery box 1 according to this embodiment may have very high stability and durability.

Referring to FIG. 1, the battery box 1 according to an embodiment of the present disclosure may include the packaging 10. The packaging 10 may be configured to house or protect the other components of the battery box 1, or provide a base on which the other components are installed. To this end, the packaging 10 may be made of a metal or plastic material having a predetermined rigidity.

In this embodiment, the packaging 10 may have a shape of a container having a predetermined space inside. The packaging 10 may include a plurality of plates connected to each other. The packaging 10 may have the components for operation or stability of the battery box 1. For example, the packaging 10 may have a terminal for electricity conduction between the battery cell 20 as described below and an external device, or a plug for venting inside the packaging 10, but is not limited thereto.

Meanwhile, in this embodiment, the packaging 10 is described as a box-shaped structure. However, if necessary, appropriate modification may be made to the shape of the packaging 10. For example, a part of the packaging 10 may have a stepped or curved shape.

Referring to FIGS. 1 and 2, the battery box 1 according to an embodiment of the present disclosure may include a cover frame 12. The cover frame 12 may be a frame for covering one side of the battery cell 20 as described below. In the illustrated embodiment, the cover frame 12 covers the lower side (negative direction of the Z axis) of the battery cell 20.

In this embodiment, the cover frame 12 may be a plate present on the inner surface of the packaging 10. For example, the cover frame 12 may be present on the bottom surface of the packaging 10. The cover frame 12 may be configured as a part of the packaging 10, or may be present on another surface of the packaging 10.

In this instance, referring to FIGS. 2, 6 and 7, the cover frame 12 may have an opening B. In this embodiment, the opening B may be defined as a predetermined space that passes through the cover frame 12 in the thickness direction. The opening B may be configured to allow gases discharged from the battery cell 20 as described below to pass therethrough. Through the location or direction of the opening B, the location or direction of gas venting from the battery cell 20 may be controlled.

In this embodiment, the opening B may include a plurality of venting holes 13. The number of venting holes 13 may correspond to the number of battery cells 20 as described below. In this instance, the plurality of venting holes 13 may be arranged along the left-right direction (Y-axis direction). The direction in which the plurality of venting holes 13 are arranged may be parallel to a direction in which the plurality of battery cells 20 are arranged.

Accordingly, the plurality of venting holes 13 may be disposed at the corresponding locations to the plurality of battery cells 20. Here, the venting holes 13 and the battery cells 20 located corresponding to each other may represent that the battery cells 20 and the venting holes 13 are located adjacent to each other to allow gases or flames released from venting portions 64 of the battery cells 20 as described below to pass through the venting holes 13.

Meanwhile, in this embodiment, the venting hole 13 may be extended in a direction. For example, the venting hole 13 may have an elliptical shape extended in a direction. However, the venting hole 13 is not limited to a particular shape and may have any shape having a long length in a specific direction. For example, the venting hole 13 may have a rectangular shape having a long length in a direction.

In this instance, in this embodiment, the direction in which the venting hole 13 is extended may be the front-rear direction (X-axis direction). The direction in which the venting hole 13 is extended may be parallel to the length direction of the venting portion 64 of the battery cell 20 as described below. As will be described in detail below, at least a part of the venting portion 64 is positioned adjacent to or close to the venting hole 13. Accordingly, as the length of the venting hole 13 increases, the part of the venting portion 64 adjacent to or close to the venting hole 13 may increase.

This configuration may increase the probability of gas flow from the part of the venting portion 64 to the vent hole 13. Accordingly, the location and direction of gas venting may be controlled more effectively. Preferably, the length of the venting hole 13 in the extension direction may be equal to or larger than the length of the venting portion 64. In this case, most of gases or flames discharged from the venting portion 64 may pass through the venting hole 13.

Meanwhile, in this embodiment, the cover frame 12 is described as covering the lower side (negative direction of the Z axis) of the battery cell 20. However, the cover frame 12 may be configured to cover the other parts of the battery cell 20. For example, the cover frame 12 may be configured to cover the left or right side of the battery cell 20. In this case, the location of the venting portion 64 in the battery cell 20 may be changed accordingly.

Referring back to FIG. 2, the battery box 1 according to an embodiment of the present disclosure may include a pressing frame 14. The pressing frame 14 may be a frame for bringing the battery cell 20 towards or closer to the cover frame 12.

In this embodiment, the pressing frame 14 may be located at the opposite side to the cover frame 12 with the battery cell 20 positioned therebetween. As shown, the cover frame 12 may be located on bottom (negative direction of the Z axis) of the battery cell 20, and the pressing frame 14 may be located on top (positive direction of the Z axis) of the battery cell 20.

In this embodiment, the pressing frame 14 may be a plate having a predetermined thickness. The pressing frame 14 may have, on the lower surface, a pressing surface 15 that contacts the battery cell 20 and applies pressure to the battery cell 20. The pressing frame 14 may be present on the ceiling within the packaging 10. However, if necessary, the pressing frame 14 may be configured as a part of the packaging 10.

Meanwhile, as described above, the pressing frame 14 may apply pressure to the battery cell 20 towards the cover frame 12. To this end, a predetermined manipulation force may be applied to the pressing frame 14 and the cover frame 12 when manufacturing the battery box 1. For example, the pressing frame 14 and the cover frame 12 may be coupled through the medium of a tensile screw (not shown), but are not limited thereto. In this instance, the battery cell 20 may be positioned between the pressing frame 14 and the cover frame 12 because a part of the battery cell 20 includes a cap 40 having a predetermined rigidity.

Meanwhile, in this disclosure, the battery box 1 may be understood as collectively referring to a battery module or a battery pack. Here, the battery module may be an assembly including a plurality of battery cells and a packaging accommodating them, and the battery pack may be an assembly including at least one battery module and another packaging accommodating them. Alternatively, the battery pack may include a plurality of battery cells and a packaging accommodating them. The battery pack of this structure may be collectively referred to as a cell-to-pack structure.

Referring to FIGS. 1 to 5, the battery box 1 according to an embodiment of the present disclosure may include the battery cell 20. The battery cell 20 may be the component that performs the charging and discharging function of the battery box 1.

The battery cell 20 may include a plurality of battery cells and the plurality of battery cells may be stacked or arranged along a direction. As illustrated, the battery cells 20 may be arranged in the left-right direction (Y-axis direction). The placement of the battery cells 20 may be appropriately changed. For example, the battery cells 20 may be arranged along a plurality of rows, or may be arranged in a plurality of layers in the top-down direction (Y-axis direction).

Hereinafter, the battery cell 20 of the battery box 1 according to an embodiment of the present disclosure will be described in more detail. Referring to FIGS. 3 to 5, the battery cell 20 according to an embodiment of the present disclosure may include an electrode assembly 30. The electrode assembly 30 may be formed by stacking a negative electrode, a separator and a positive electrode in a sequential order. The type of the electrode assembly 30 may include a cylindrical type, a stack type or a folding type according to the shape, but the type or shape of the electrode assembly 30 is not limited thereto.

Meanwhile, the electrode assembly 30 may be an all-solid-state battery. More specifically, the electrode assembly 30 may be an assembly including a plurality of positive electrodes, solid electrolytes and negative electrodes stacked. Alternatively, the electrode assembly 30 may be a bipolar all-solid-state battery including two or more unit cells connected in series, each cell including a positive electrode (or a negative electrode), a solid electrolyte and a porous current collector.

In an embodiment, the electrode assembly 30 may have an electrode tab 32 on one side. The electrode tab 32 may be configured to conduct electricity between the negative electrode or the positive electrode of the battery cell 20 and the external device. The electrode tab 32 may be made of a conductive film, but is not limited thereto.

The electrode tab 32 may include a plurality of electrode tabs. The number of electrode tabs 32 may correspond to the number of negative and positive electrodes of the electrode assembly 30. In this instance, the electrode tabs 32 connected to the negative electrode and the electrode tabs 32 connected to the positive electrode may be extended from the electrode assembly 30 in different directions. For example, the electrode tabs 32 connected to the negative electrode and the electrode tabs 32 connected to the positive electrode may be extended in opposite directions in the front-rear direction (X-axis direction).

In this embodiment, the battery cell 20 may include the cap 40. The cap 40 may have stronger rigidity than an outer casing film 60 as described below. The cap 40 may include a pair of caps to cover two sides of the electrode assembly 30. For example, the pair of caps 40 may cover the front (positive direction of the X axis) side and the rear (negative direction of the X axis) side of the electrode assembly 30, respectively.

In this embodiment, the cap 40 may include a connection portion 42. The connection portion 42 may be configured to connect the cap 40 to the outer casing film 60 and hold them together. To this end, the connection portion 42 may be made of a material that bonds well with the outer casing film 60. For example, the connection portion 42 may include a resin formed by sealing, or may be made of an adhesive. However, the material of the connection portion 42 is not limited thereto.

In this embodiment, the connection portion 42 may include a cover part covering one side of the electrode assembly 30 and a connection part disposed along the periphery of the cover part. The connection part may be extended from the cover part.

In this instance, the connection part may be extended from the cover part toward the opposing cap 40. Describing in another word, the connection part may be extended to the electrode assembly 30. The outer casing film 60 may be coupled in contact with the outer surface of the connection part. In this instance, the outer surface of the connection part may be a surface facing the outside of the electrode assembly 30.

In this embodiment, the cap 40 may include a cover portion 44. The cover portion 44 may be configured to improve the structural stability of the cap 40. To this end, the cover portion 44 may be made of a material having stronger rigidity than the connection portion 42. For example, the cover portion 44 may be made of a metal or reinforced plastic, but the material of the cover portion 44 is not limited thereto.

In this embodiment, the cover portion 44 may include an exposed part covering the outer surface of the cover part of the connection portion 42 and a buried part disposed at the periphery of the exposed part. In this instance, the outer surface of the cover part covered by the exposed part may be a surface facing the outside of the electrode assembly 30. Through this, the cap 40 may have strong stability against external physical/chemical shocks or external forces.

In this instance, the buried part may be extended from the exposed part toward the opposing cap 40. Describing in another word, the buried portion may be extended to the electrode assembly 30. In this instance, the buried part may be buried in the connection portion 42. Accordingly, the coupling strength between the connection portion 42 and the cover portion 44 may be increased. The coupling between them may be done by heat sealing or an adhesive, but is not limited thereto. Meanwhile, if necessary, the connection portion 42 may be only present between the cover portion 44 and the outer casing film 60, and the other parts of the cover portion 44 may be exposed to the outside, not buried in the connection portion 42.

Referring back to FIGS. 1 to 5, as described above, the battery cell 20 according to this embodiment includes the cap 40 having the predetermined rigidity. The cap 40 may stably support most of external force applied to the battery cell 20. In this instance, the external force may be a force that the pressing frame 14 applies to the battery cell 20 towards the cover frame 12.

In this embodiment, the cap 40 may support most of external force instead of the outer casing film 60 as described below. Accordingly, the cap 40 may minimize the direct application of external force to the electrode assembly 30. Through this, the battery box 1 may control the location and direction of gas venting and improve structural stability as well.

Meanwhile, in this embodiment, the battery cell 20 may include a terminal 50. The terminal 50 is configured to conduct electricity between the electrode assembly 30 and the external device. In this embodiment, the terminal 50 may include a pair of terminals and the pair of terminals may be coupled to the pair of caps 40, respectively. In this instance, electricity may be conducted between the pair of terminals 50 and the negative electrode and the positive electrode of the electrode assembly 30, respectively.

In this embodiment, the terminal 50 may pass through the cap 40 and be coupled to the cap 40. The terminal 50 may have a rivet structure to avoid being separated from the cap 40, but the structure or shape of the terminal 50 is not limited thereto. One side of the terminal 50 may be located at the inside of the cap 40, and the other side may be located at the outside of the cap 40. In this instance, the inside of the cap 40 may be a part facing the electrode assembly 30, and the outside of the cap 40 may be a part facing the outside of the electrode assembly 30.

The electrode tab 32 may be coupled to one side of the terminal 50. For example, the electrode tab 32 may be welded to one side of the terminal 50, but the method of coupling is not limited to the welding process. Through this, electricity may be conducted between the electrode assembly 30 and the terminal 50. Although not shown, a gasket may be present between the terminal 50 and the cap 40. The gasket may form a seal between the terminal 50 and the cap 40 to perform a function of preventing electrolyte leaks.

Referring to FIGS. 2 to 5, the battery cell 20 according to an embodiment of the present disclosure may include the outer casing film 60. The outer casing film 60 may be configured to cover a part of the electrode assembly 30. In this case, the part may be the remaining part of the electrode assembly 30 not covered by the pair of caps 40.

In this embodiment, the outer casing film 60 may be made of a deformable material. For example, the outer casing film 60 may bend. In addition, the outer casing film 60 may be made of an inelastic material. A space for housing the electrode assembly is generally formed by a forming process of a pouch film. However, because the outer casing film 60 does not need to change the shape through forming, the outer casing film 60 may be made of an inelastic material. That is, the outer casing film 60 may be non-elastic.

The outer casing film 60 may include a plurality of layers including a sealant layer, a barrier layer and an insulating layer. The sealant layer, the barrier layer and the insulating layer may be positioned in a sequential order from the inside near the electrode assembly 30.

The sealant layer may include a material having a heat sealing property to couple one end to the other end of the outer casing film 60. For example, the sealant layer of the outer casing film 60 may include at least one material selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, Teflon and glass fiber. The sealant layer may mainly include a polyolefin-based resin, for example, polypropylene (PP) or polyethylene (PE), but is not limited thereto. In particular, polypropylene (PP) may have good mechanical properties such as tensile strength, rigidity, surface hardness, wear resistance or heat resistance and chemical properties such as corrosion resistance.

The barrier layer may include a metal. For example, the metal of the barrier layer may include at least one material selected from the group consisting of iron (Fe), carbon (C), chromium (Cr), manganese (Mn), nickel (Ni) and aluminum (Al). For example, the barrier layer may include stainless steel (STS). Additionally, the barrier layer may include an alloy, for example, an aluminum alloy, but is not limited thereto.

The insulating layer may include an insulating material. That is, the electrode assembly 30 may be insulated from the outside by the insulating layer. Accordingly, the insulating layer may prevent a short circuit of the outer casing film 60. For example, the insulating layer may include at least one material selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, Teflon and glass fiber. The insulating layer may mainly include polymer, for example, nylon resin or polyethylene terephthalate (PET) having wear resistance and heat resistance, but is not limited thereto.

Referring to FIGS. 3 to 5, in this embodiment, the outer casing film 60 may include an accommodation portion 62. The accommodation portion 62 may be configured to cover the remaining part of the electrode assembly 30 not covered by the pair of caps 40.

To this end, the accommodation portion 62 may surround the electrode assembly 30 in a peripheral direction. In this instance, the peripheral direction may be a direction surrounding the axis (X axis) parallel to the length direction of the electrode assembly 30. Describing in another word, the peripheral direction may be a direction surrounding the axis (X axis) parallel to the direction in which the pair of caps 40 are spaced apart from each other. Accordingly, the accommodation portion 62 may have an accommodation space A in which the electrode assembly 30 is housed.

Referring to FIGS. 3 to 5, two sides of the accommodation portion 62 may be coupled to the connection portions 42 of the pair of caps 40, respectively. In this instance, the two sides of the accommodation portion 62 may be front (positive direction of the X axis) and rear (negative direction of the X axis) side parts.

Additionally, the two sides of the accommodation portion 62 may be coupled to the connection parts of the connection portions 42. The two sides of the accommodation portion 62 may surround the connection parts of the connection portions 42 in the peripheral direction. In this instance, the accommodation portion 62 and the connection portion 42 may be coupled by a sealing process using heat fusion, but the method of coupling is not limited thereto.

As described above, in this embodiment, the peripheral portion of the electrode assembly 30 is covered by the outer casing film 60 having a predetermined flexibility. Accordingly, when an external force is applied to the battery cell 20 by the pressing frame 14, the outer casing film 60 may be appropriately deformed to mitigate the external force. In addition, most of the external force may be applied to the caps 40 as described above. Accordingly, the direct application of external force to the electrode assembly 30 may be minimized.

In particular, in this embodiment, damage to the electrode assembly 30 or performance degradation of the battery cell 20 by charging and discharging may be minimized. Describing in more detail, during charging and discharging, the electrode assembly 30 may expand or contract, and in this embodiment, the outer casing film 60 having flexibility may deform as the electrode assembly 30 expands or contracts. Through this, excessive force applied to some parts of the electrode assembly 30 may be minimized, thereby preventing damage or performance degradation of the electrode assembly 30.

Meanwhile, the outer casing film 60 of the battery cell 20 according to an embodiment of the present disclosure may include the venting portion 64. The venting portion 64 may be a part of the outer casing film 60 where gas is vented. To this end, the venting portion 64 may easily rupture in response to a pressure rise of the accommodation space A. The venting portion 64 may be present on one side of the accommodation portion 62.

In this embodiment, the venting portion 64 may include a first coupling portion 64a connected to one edge part 62a of the accommodation portion 62 and a second coupling portion 64b connected to the other edge part 62b of the accommodation portion 62.

In this instance, the edge parts 62a, 62b of the accommodation portion 62 may be edges extended along the front-rear direction (X-axis direction) which is the length direction of the battery cell 20. An end of the edge part 62a and an end of the other edge part 62b may be positioned facing each other. This is because the accommodation portion 62 surrounds the electrode assembly 30 in the peripheral direction.

Meanwhile, in this embodiment, the edge part 62a and the edge part 62b facing each other are depicted as being placed on the side of the battery cell 20. However, if necessary, the parts 62a, 62b may be disposed at any other location of the battery cell 20. For example, the parts 62a, 62b may be located at the corner of the battery cell 20.

In this embodiment, the first coupling portion 64a and the second coupling portion 64b may overlap each other. The first coupling portion 64a and the second coupling portion 64b may be coupled to each other. For example, the first coupling portion 64a and the second coupling portion 64b may be sealed using heat fusion, but the method of coupling is not limited thereto. In this embodiment, the first coupling portion 64a and the second coupling portion 64b may be extended in the front-rear direction (X-axis direction) along the edge parts 62a, 62b of the accommodation portion 62.

As described above, in the outer casing film 60 according to this embodiment, the accommodation portion 62 is connected by the single outer casing film, but the venting portion 64 is formed by sealing different parts of the outer casing film, so when the pressure or temperature of the accommodation space A rises, the venting portion 64 may rupture earlier than the accommodation portion 62. Accordingly, gases in the accommodation space A may be released through the venting portion 64.

In this instance, referring back to FIG. 2, in this embodiment, the venting portion 64 of the battery cell 20 may be positioned facing the opening B of the cover frame 12. In this instance, the venting portion 64 may be adjacent to or close to the opening B. This may be because the pressing frame 14 applies pressure to the battery cell 20 towards the cover frame 12.

Through this, most of gases released from the venting portion 64 may flow to the opening B. Accordingly, the location and direction of gas venting may be appropriately controlled. It will be described in detail with reference to FIGS. 6 and 7.

Meanwhile, in this embodiment, the venting portion 64 is described as an area where the edge parts of the outer casing film 60 are sealed in contact with each other. However, the venting portion 64 is not limited to a particular structure or shape, and may have any structure or shape for releasing gases earlier than the other parts of the outer casing film 60. For example, the venting portion 64 may be defined as a notched area of the outer casing film 60, or may be configured as a valve or plug coupled to one side of the accommodation portion 62.

Hereinafter, the process for controlling the direction and location of gas venting in the battery box according to an embodiment of the present disclosure will be described in detail.

As shown in FIG. 6, in normal operating condition of the battery cell 20, the accommodation space A may be isolated from the outside of the battery cell 20. However, gas generation may rise the pressure in the accommodation space A of the battery cell 20. For example, an excessive amount of gases may be produced from the electrode assembly 30 by external physical, chemical or thermal shocks. Hereinafter, this condition is referred to as an abnormal condition.

In the abnormal condition, it is necessary to release the gases produced from the battery cell 20 into the outside. This may be achieved by the venting portion 64. More specifically, as shown in FIG. 7, in the abnormal condition, the venting portion 64 of the battery cell 20 may rupture to release the gases.

In this instance, in this embodiment, because the venting portion 64 of the battery cell 20 is positioned facing the opening B of the cover frame 12, most of the gases released from the venting portion 64 may flow to the opening B. The opening B may be connected to a part of the battery box 1. Through this, the direction and location of gas or flame venting in the battery box 1 may be appropriately controlled.

In this instance, in this embodiment, because the venting portion 64 is close to the opening B, almost all of the gases released from the venting portion 64 may flow to the opening B. Accordingly, the battery box 1 according to this embodiment may control the direction and location of gas or flame venting very effectively.

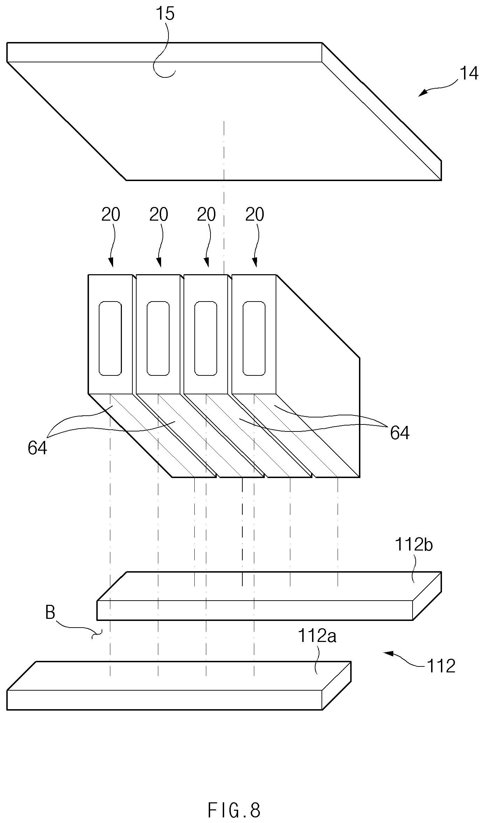

Hereinafter, the battery box according to another embodiment of the present disclosure will be described with reference to another drawing. FIG. 8 is an exploded perspective view of the battery box according to another embodiment of the present disclosure. In this instance, differences between the battery box according to another embodiment of the present disclosure and the battery box according to the previous embodiment will be mainly described. Meanwhile, the components indicated by the same reference numerals as the reference numerals indicated in the drawings described above may be understood as the same components that perform the same function.

FIG. 8 shows the battery box according to another embodiment of the present disclosure. Referring to FIG. 8, the cover frame 112 of the battery box according to another embodiment of the present disclosure may be located on bottom of the plurality of battery cells 20 stacked in the left-right direction. The cover frame 112 may support the bottom of the battery cells 20.

In this instance, the cover frame 112 of the battery box according to another embodiment of the present disclosure may include a first support portion 112a and a second support portion 112b. The first support portion 112a and the second support portion 112b may be spaced a predetermined distance apart from each other in the front-rear direction with the opening B positioned therebetween.

Describing in another word, in this embodiment, the opening B may be defined as a predetermined space between the first support portion 112a and the second support portion 112b. The first support portion 112a and the second support portion 112b may be extended in parallel in the left-right direction. The left-right direction may be a direction in which the plurality of battery cells 20 are stacked.

In this instance, in this embodiment, the distance between the first support portion 112a and the second support portion 112b may be equal to or smaller than the distance between the pair of caps of the battery cell 20. This configuration may allow the first and second support portions 112a, 112b to support the pair of caps, respectively. Additionally, a part of the battery cell 20 between the pair of caps may be positioned adjacent to the opening B. In this instance, the venting portion 64 of the battery cell 20 may be positioned facing the opening B.

Accordingly, when the pressing frame 14 applies pressure to the battery cell 20 towards the cover frame 112, the outer casing film having relatively weak rigidity may not be subjected to excessive force when it is deformed such that it protrudes toward the opening B. In addition, the caps of the battery cell 20 having relatively strong rigidity may withstand the external force from the pressing frame 14 because they are supported in contact with the pair of support portions 112a, 112b.

In particular, in this embodiment, the top of the battery cell 20 is in close contact with the pressing frame 14, the left and right sides are in close contact with the adjacent battery cells 20, and only the bottom having the venting portion 64 has a predetermined degree of freedom by the opening B, so gases produced from the inside of the battery cell 20 may exit the opening B through the venting portions 64 quickly.

Although the present disclosure has been hereinabove described by certain embodiments and drawings, the present disclosure is not limited thereto, and it is obvious to persons having ordinary skill in the technical field pertaining to the present disclosure that many modifications and changes may be made thereto within the technical aspects of the present disclosure and the scope of the appended claims and their equivalents.

### [List of Reference Numerals]

| | | | |
|---|---|---|---|
| 1: | Battery box | 10: | Packaging |
| 12, 112: | Cover frame | 14: | Pressing frame |
| 20: | Battery cell | 30: | Electrode assembly |
| 40: | Cap | 50: | Terminal |
| 60: | Outer casing film | 62: | Accommodation portion |
| 64: | Venting portion | A: | Accommodation space |
| B: | Opening | | |

## Claims

1. A battery box comprising:
a battery cell including an electrode assembly extended in an direction, an outer casing film accommodating the electrode assembly and a cap coupled to the outer casing film and shielding a side of the electrode assembly in a length direction; and
a frame supporting the battery cell and having an opening,
wherein the outer casing film includes:
an accommodation portion surrounding the electrode assembly; and
a venting portion present on a side of the accommodation portion, and
wherein the venting portion is positioned facing the opening.

2. The battery box according to claim 1,
wherein the cover frame includes a pair of support portions arranged in parallel with the opening positioned therebetween, and
wherein the battery cell is supported by the pair of support portions.

3. The battery box according to claim 2,
wherein the battery cell includes a plurality of battery cells, and the plurality of battery cells is arranged along a direction, and
wherein the pair of support portions are extended parallel to the direction.

4. The battery box according to claim 2,
wherein the cap includes a pair of caps and the pair of caps are disposed at two sides of the electrode assembly, respectively, and
wherein the pair of support portions support the pair of caps, respectively.

5. The battery box according to claim 1,
wherein the cap includes a pair of caps and the pair of caps are disposed at two sides of the electrode assembly, respectively,
wherein the battery cell includes a pair of terminals electrically connected to a negative electrode and a positive electrode of the electrode assembly, respectively, and
wherein the pair of terminals are coupled to the pair of caps, respectively.

6. The battery box according to claim 1,
wherein the cover frame has a shape of a plate on which the battery cell is placed.

7. The battery box according to claim 8,
wherein the opening includes a plurality of venting holes formed in the cover frame.

8. The battery box according to claim 7,
wherein the venting portion is extended in a direction, and
wherein the venting hole is extended in a length direction of the venting portion.

9. The battery box according to claim 7,
wherein the battery cell includes a plurality of battery cells, and
wherein the plurality of venting holes corresponds to the plurality of battery cells, respectively.

10. The battery box according to claim 9,
wherein the plurality of battery cells is arranged in a direction, and
wherein the plurality of venting holes is arranged along the direction.

11. The battery box according to claim 1,
wherein the venting portion is in close contact with the cover frame such that the venting portion is adjacent to the opening.

12. The battery box according to claim 11, further comprising:
a pressing frame to apply pressure to the battery cell towards the cover frame.

13. The battery box according to claim 12,
wherein the pressing frame is located at an opposite side to the cover frame with the battery cell positioned therebetween.

14. The battery box according to claim 12,
wherein the pressing frame has a shape of a plate having a surface that contacts the battery cell.

15. The battery box according to claim 1,
wherein the venting portion is configured to rupture to release gases when a pressure in an accommodation space rises.

16. The battery box according to claim 15,
wherein the venting portion includes a sealing part sealed in a length direction of the electrode assembly.

17. The battery box according to claim 15,
wherein the venting portion ruptures earlier than the accommodation portion by the pressure rise of the accommodation space.

18. The battery box according to claim 17,
wherein the venting portion includes:
a first coupling portion connected to an edge part of the accommodation portion; and
a second coupling portion connected to another edge part of the accommodation portion and coupled to the first coupling portion.
